# EUROPEAN PATENT SPECIFICATION

(11) **EP 4 433 694 B1**
(45) Date of publication and mention of the grant of the patent: **01.04.2026**
(21) Application number: 22817984.2
(22) Date of filing: 15.11.2022
(51) Int. Cl.: F02B 67/06

(54) **ARRANGEMENT OF AUXILIARY EQUIPMENT IN THE ENGINE BAY OF A COMMERCIAL VEHICLE**
ANORDNUNG VON ZUSATZGERÄTEN IM MOTORRAUM EINES NUTZFAHRZEUGS
AMÉNAGEMENT D'ÉQUIPEMENT AUXILIAIRE DANS LE COMPARTIMENT MOTEUR D'UN VÉHICULE UTILITAIRE

(30) Priority: 17.11.2021 GB 202116532
(43) Date of publication of application: 25.09.2024
(73) Proprietor: Daimler Truck AG, 70771 Leinfelden-Echterdingen (DE)
(72) Inventor: REYNOLDS, David, Shelby, North Carolina 28152 (US); VAN HAVERBEKE, John R., Duncan, South Carolina 29334 (US); WATSON, Scott, Boiling Spring, South Carolina 29316 (US); PARSONS, Jason, Kings Mountain, North Carolina 28086 (US)
(74) Representative: impuls legal PartG mbB
(86) International application number: PCT/EP2022/081996
(87) International publication number: WO 2023/088901

(56) References cited:
- DE-A1- 102005 023 830
- US-A- 4 697 782
- US-A- 6 101 995
- US-A1- 2009 107 448
- US-A1- 2014 329 630

## Description

### FIELD OF THE INVENTION

The invention relates to an internal combustion engine for a vehicle, in particular a commercial vehicle.

### BACKGROUND INFORMATION

CN 2009 55647 shows an engine integral accessory bracket. Furthermore, KR 20040029736 A1 shows a bracket for mounting auxiliary equipment of an engine. Moreover, US 2002/0035980 A1 shows a multi-cylinder engine comprising a cylinder block and a cylinder head mounted on said cylinder block.
US 2014/0329630 A1 describes a system comprising a vehicle engine with a crankshaft, a bracket structure coupled to the vehicle engine, a thermostat positioned in the bracket structure, an accessory device coupled to the bracket structure, a water pump mounted to the bracket structure, and a drive loop coupling the accessory device and water pump with the crankshaft.
US 4 697 782 A describes a structure for mounting, on an engine body, a plurality of auxiliaries such as an alternator, a compressor for an air conditioner, a power steering device, and the like, which are driven via respective belts by a crank pulley of the engine of the vehicle. The auxiliaries are fixed on a single structured bracket at one sides thereof in multistages. The adjacent auxiliaries are rigidly connected to each other by means of respective brackets at other sides thereof opposite from the single structured bracket.
US 6 101 995 A describes an auxiliary part mounting bracket for an in-line multicylinder engine. An oil pump, an auto-tensioner, an alternator, a water pump and a compressor are preassembled on the auxiliary part mounting bracket to form an assembly. This assembly is fixed to a side of the engine cylinder block by six bolts. One bolt is threadedly inserted into the cylinder block through a space defined between the upper oil pump and auto-tensioner and the lower alternator and water pump; two bolts are threadedly inserted into the cylinder block through a space defined between the upper positioned alternator and water pump and the lower positioned compressor. Thus, it is possible to enhance the assembling operation, when the plurality of auxiliary parts are fixed to an engine body through the auxiliary part mounting bracket.
US 2009/0107448 A1 describes an aggregate carrier which is provided for an internal combustion engine of a motor vehicle that serves to connect motor vehicle aggregates to the internal combustion engine and for this purpose includes, but is not limited to a first mount to be connected to the internal combustion engine. The first mount is realized in such a way that a force can be exerted upon the internal combustion engine in a first mounting direction. The aggregate carrier furthermore features a second mount to be connected to the internal combustion engine. The second mount is realized in such a way that a force can be exerted upon the internal combustion engine in a second mounting direction. The second mounting direction extends at an angle a relative to the first mounting direction.
DE10 2005 023 830 A1 describes a device for mounting an additional unit (e.g. an air conditioning compressor) in the engine compartment of a motor vehicle, wherein the additional unit can be driven by a motor via a drive belt. The device contains a first support bracket element fixed to the motor; a second support bracket element which is attached to the first support bracket element so as to be rotatable about a horizontal axis of rotation and on which the additional unit can be mounted; and a support device fixed to the frame for elastically supporting the second support bracket element.

### SUMMARY OF THE INVENTION

It is an object of the present invention to provide an internal combustion engine for a vehicle such that auxiliary components may be installed in a particularly space-saving way. In an embodiment, the invention may provide packaging benefits for particular auxiliary components for the internal combustion engine. In an exemplary embodiment, the invention may enable application specific packaging for the internal combustion engine (e.g. provide advantageous packaging for alternative configurations of the internal combustion engine comprising particular auxiliary components.)

This object is solved by an internal combustion engine having the features of claim 1. Advantageous embodiments with expedient developments of the invention are indicated in the other claims.

The invention relates to an internal combustion engine for a vehicle, in particular a commercial vehicle. Thus, the internal combustion engine is configured to drive the vehicle. Preferably, the internal combustion engine is configured as a reciprocating engine. The internal combustion engine comprises a cylinder block comprising a plurality of cylinders. Preferably, the cylinders, in particular their cylinder axes, are arranged in succession along a straight line thereby, for example, forming a cylinder row. The internal combustion engine further comprises a crankshaft rotatably mounted on the cylinder block about a crankshaft rotation axis. The crankshaft is an output shaft via which the internal combustion engine may provide torques for driving the vehicle. Said crankshaft rotation axis extends in a plane which, with respect to an installation position of the internal combustion engine, extends in a vertical direction of the vehicle. The internal combustion engine assumes its installation position in a fully manufactured or assembled state of the vehicle which, in its fully manufactured or assembled state, is equipped with the internal combustion engine. With respect to the fully manufactured or assembled state of the vehicle, the transverse direction of the vehicle extends perpendicularly to a longitudinal direction of the vehicle. When the vehicle is driven forwards, in particular without performing a turning maneuver, the vehicle travels along its longitudinal direction. The vehicle further comprises a transverse direction which extends perpendicularly to both the longitudinal direction and the vertical direction of the vehicle. When the vehicle stands on a horizontal plane, the vertical direction of the vehicle extends perpendicularly to the horizontal plane.

The internal combustion engine according to the present invention further comprises a mounting bracket separately manufactured from the cylinder block. The mounting bracket is attached to the cylinder block. In an embodiment, the cylinder block and the mounting bracket are separately manufactured components which are connected with each other. The internal combustion engine further comprises at least one belt configured to be driven by the crankshaft, in particular via a crankshaft pulley. For example, the crankshaft pulley is connected with a crankshaft in a rotationally fixed manner. The internal combustion engine further comprises an alternator configured to be driven by the at least one belt. For example, the alternator is a primary alternator of the internal combustion engine. The alternator is mounted on the mounting bracket such that the alternator is mounted on the cylinder block via the mounting bracket. The internal combustion engine according to the present invention further comprises a hydraulic steering pump configured to convey a hydraulic medium for a hydraulic power steering of the vehicle. The hydraulic steering pump is configured to be driven by the at least one belt. Thus, the alternator and the hydraulic steering pump are configured to be driven by the crankshaft via the at least one belt. The hydraulic steering pump is mounted on the mounting bracket such that the hydraulic steering pump is mounted on the cylinder block via the mounting bracket.

The internal combustion engine comprises at least one refrigerating compressor configured to compress and convey a refrigerant of an air conditioning system. The air conditioning system is also referred to as an air
conditioner or an air conditioning or an A/C such that the refrigerating compressor is also referred to as an A/C compressor. In another exemplary embodiment, the internal combustion engine may not comprise a refrigerating compressor. In yet another exemplary embodiment, the internal combustion may comprise one primary refrigerating compressor, and one secondary refrigerating compressor. Via the mounting bracket, the internal combustion engine may be customized to comprise a desired configuration of auxiliary components (e.g. at least one refrigerating compressor). The at least one refrigerating compressor may be configured to be driven by at the least one belt such that the at least one refrigerating compressor is configured to be driven by the crankshaft via the at least one belt. In an exemplary embodiment, the internal combustion engine may comprise two refrigerating compressors where each refrigerating compressor is driven by a belt. In an embodiment, a refrigerating compressor may be mounted on the mounting bracket such that the refrigerating compressor is mounted on the cylinder block via the mounting bracket. The auxiliary components of the internal combustion engine may comprise the alternator, the hydraulic steering pump and the at least one refrigerating compressor.

In an embodiment, particular auxiliary components (e.g. the alternator, hydraulic steering pump, and a refrigerating compressor) may be arranged on the left-hand side of the plane with respect to the installation position and forward driving direction of the vehicle.

In comparison with conventional solutions, said auxiliary components are relocated such that the internal combustion engine according to the present invention may be arranged in the vehicle in a particularly advantageous way, in particular in a small installation space. Furthermore, the internal combustion engine according to the present invention may be configured such that auxiliary components may be arranged according to customer needs.

In an embodiment, with respect to the installation position of the internal combustion engine, a belt is arranged on a front side of the cylinder block, the front side facing forwards in a longitudinal direction of the vehicle and thus in the forward driving direction of the vehicle. In another embodiment, the internal combustion engine may comprise a single refrigerating compressor. In another embodiment, the internal combustion engine may comprise a primary and a secondary refrigerating compressor. In this regard, the internal combustion engine may comprise a primary refrigerating compressor, which may be driven by a primary belt, and a secondary refrigerating compressor which may be driven by a secondary belt. Further, the secondary refrigerating compressor may be mounted to the cylinder block of the internal combustion engine via the mounting bracket. By the invention, cost benefits may be realized, said cost benefits resulting from mounting the auxiliary components to the cylinder block via the mutual mounting bracket.

Further advantages, features, and details of the invention derive from the following description of a preferred embodiment as well as from the drawings. The features and feature combinations previously mentioned in the description as well as the features and feature combinations mentioned in the following description of the figures and/or shown in the figures alone may be employed not only in the respectively indicated combination but also in any other combination or taken alone.

### BRIEF DESCRIPTION OF THE DRAWINGS

The features and characteristic of the disclosure are set forth in the appended claims. The accompanying drawings illustrate exemplary embodiments and together with the description, serve to explain the disclosed principles. In the figures, the left-most digit(s) of a reference number identifies the figure in which the reference number first appears. The same numbers are used throughout the figures to reference like features and components. Some embodiments of system and/or methods in accordance with embodiments of the present subject matter are now described below, by way of example only, and with reference to the accompanying figures.
Fig. 1 shows a schematic front view of a first exemplary configuration of an internal combustion engine for a vehicle.
Fig. 2 shows a schematic front view of a second exemplary configuration of an internal combustion engine for a vehicle.
Fig. 3 shows a schematic front view of a third exemplary configuration of an internal combustion engine for a vehicle.
Fig. 4 shows a part of a schematic perspective view of the internal combustion engine.
Fig. 5 shows a schematic perspective view of a first mounting bracket of the internal combustion engine.
Fig. 6 shows a schematic perspective view of the second mounting bracket of the internal combustion engine.

In the figures the same elements or elements having the same function are indicated by the same reference signs.

### DETAILED DESCRIPTION

In the present document, the word "exemplary" is used herein to mean "serving as an example, instance, or illustration". Any embodiment or implementation of the present subject matter described herein as "exemplary" is not necessarily to be construed as preferred or advantageous over other embodiments.

While the disclosure is susceptible to various modifications and alternative forms, specific embodiments thereof have been shown by way of example in the drawing and will be described in detail below. It should be understood, however, that it is not intended to limit the disclosure to the particular forms disclosed.

The terms "comprises", "comprising", or any other variations thereof, are intended to cover a non-exclusive inclusion so that a setup, device or method that comprises a list of components or steps does not include only those components or steps but may include other components or steps not expressly listed or inherent to such setup or device or method. In other words, one or more elements in a system or apparatus preceded by "comprises" or "comprise" does not or do not, without more constraints, preclude the existence of other elements or additional elements in the system or method.

In the following detailed description of the embodiment of the disclosure, reference is made to the accompanying drawing that forms part hereof, and in which is shown by way of illustration a specific embodiment in which the disclosure may be practiced. It is to be understood that other embodiments may be utilized and that changes may be made. The following description is, therefore, not to be taken in a limiting sense.

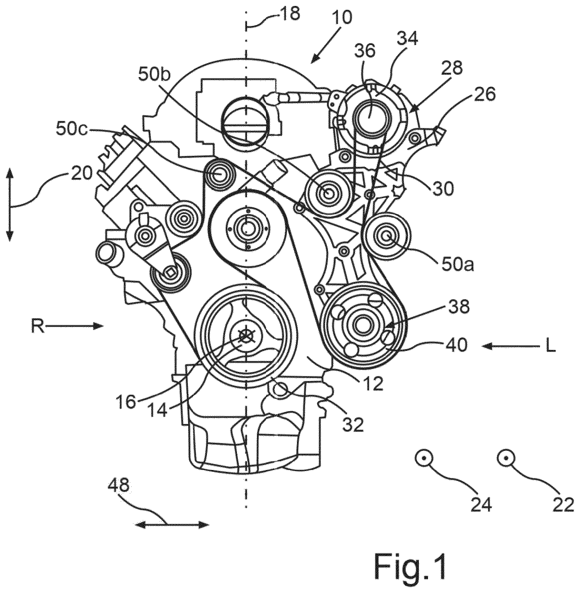

Fig. 1 shows in a schematic front view in an internal combustion engine 10 for a vehicle such as, for example, a commercial vehicle. Thus, in its fully manufactured state, the vehicle comprises the internal combustion engine 10 configured to drive the vehicle. Preferably, the vehicle is configured as a truck. Preferably, the internal combustion engine 10 is configured as a gasoline engine. The internal combustion engine 10 is also referred to as an engine. The internal combustion engine 10 comprises a cylinder block 12 comprising a plurality of cylinders. Preferably, the cylinder block 12 may comprise at least or exactly six, in particular at least or exactly eight, cylinders. For example, in each cylinder, a piston is translationally movably arranged in the respective cylinder. The internal combustion engine 10 further comprises a crankshaft 14. The pistons are articulatedly connected with the crankshaft 14 by respective connecting rods such that translational movements of the pistons in the cylinders may be converted into a rotational movement of the crankshaft 14 about a crankshaft rotation axis 16 in relation to the cylinder block 12. Thus, the crankshaft 14 is rotatably mounted on the cylinder block 12 about the crankshaft rotation axis 16. The crankshaft rotation axis 16 extends in a plane 18 which, with respect to an installation position of the internal combustion engine 10, extends in a vertical direction of the vehicle. Fig. 1 shows said installation position of the internal combustion engine 10, wherein, in Fig. 1, the vertical direction of the vehicle is illustrated by a double arrow 20. The vehicle also comprises a longitudinal direction extending perpendicularly to the vertical direction, wherein the longitudinal direction is illustrated by a double arrow 22. In Fig. 1, an arrow 24 illustrates a forward driving direction of the vehicle. The forward driving direction of the vehicle coincides or extends parallel to the longitudinal direction of the vehicle from a back to a front of the vehicle. Thus, the arrow 24 and the forward driving direction extends towards a person looking at or viewing Fig. 1. Preferably, the internal combustion engine 10 is a front engine.

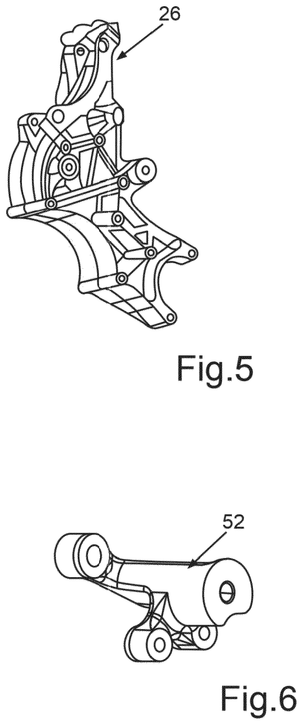

The internal combustion engine 10 further comprises a first mounting bracket 26 which is separately manufactured from the cylinder block 12. The mounting bracket 26 is attached to the cylinder block 12, in particular directly. The mounting bracket 26 is shown in Fig. 5 in a schematic perspective view. Preferably, the mounting bracket 26 is formed in one piece. This means that, preferably, the mounting bracket 26 is an integral part, i.e. an integrally formed part. In other words, the mounting bracket 26 does not comprise a plurality of separately manufactured components which are connected with each other.

Furthermore, the internal combustion engine 10 comprises a belt drive 28 comprising a belt 30. The belt 30 is configured to be driven by the crankshaft 14. For this purpose, a crankshaft pulley 32, which may be a part of the belt drive 28, is connected with the crankshaft 14, preferably in a rotatably fixed manner. The belt 30 wraps around the crankshaft pulley 32 at least partially, such that, by rotating the crankshaft 14 and thus the crankshaft pulley 32 about the rotation axis 16 in relation to the cylinder block 12, the belt 30 is driven.

The internal combustion engine 10 comprises a first auxiliary component being an alternator 34. The alternator 34 is configured to be driven by the belt 30. For this purpose, an alternator pulley 36 is connected with a shaft of the alternator 34, in particular in a rotatably fixed manner. The belt 30 wraps around the alternator pulley 36 such that, by driving the belt 30, the alternator pulley 36 and thus the alternator 34 are driven. As shown in Fig. 1, the alternator 34 is mounted on the mounting bracket 26.

The internal combustion engine 10 further comprises a second auxiliary component being a hydraulic steering pump 38 which is configured to be driven by the belt 30. For this purpose, a pump pulley 40 is connected with a shaft of the hydraulic steering pump 38, in particular in a rotationally fixed manner. Thus, by driving the belt 30, the pump pulley 40 and thus the hydraulic steering pump 38 are driven. As shown in Fig. 1, the hydraulic steering pump 38 is mounted on the mounting bracket 26.

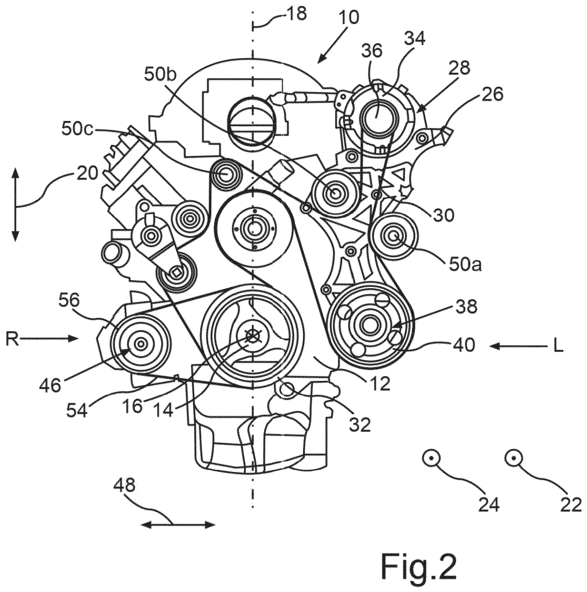

Fig. 1 shows a first exemplary internal combustion engine 10 wherein the internal combustion engine 10 does not comprise a refrigerating compressor. Fig. 2 shows a second exemplary embodiment of the internal combustion engine 10 wherein the internal combustion engine 10 comprises a refrigerating compressor 46, also referred to as a primary refrigerating compressor 46. The primary refrigerating compressor 46 is configured to be driven by a belt 54, also referred to as a primary belt 54. For this purpose, for example, a compressor pulley 56 is connected with a shaft of the refrigerating compressor 46, in particular in a rotationally fixed manner. Thus, by driving the belt 54, the compressor pulley 56 and thus the refrigerating compressor 46 are driven.

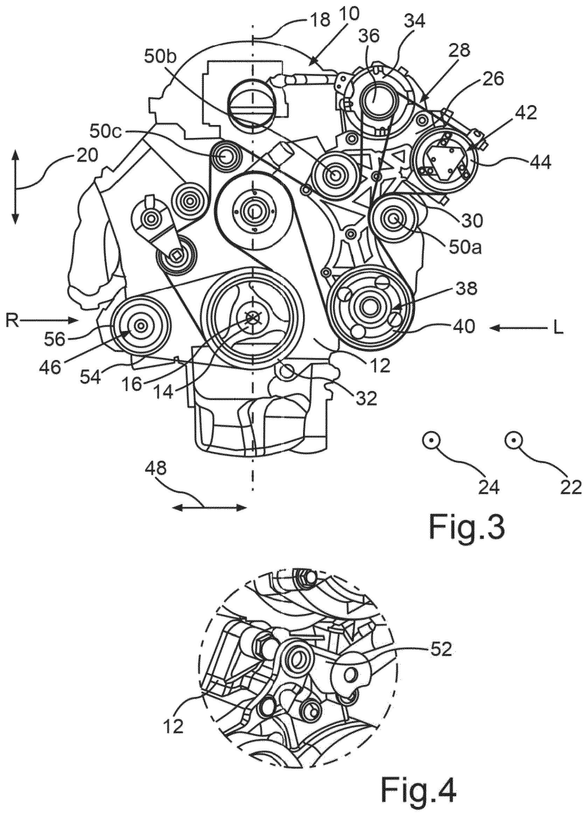

Fig. 3 shows a third exemplary embodiment of the internal combustion engine 10 wherein the internal combustion engine 10 comprises a primary refrigerating compressor 46 and a secondary refrigerating compressor 42 as an auxiliary component. The secondary refrigerating compressor 42 is configured to be driven by the belt 30, also referred to as the secondary belt 30. For this purpose, for example, a compressor pulley 44 is connected with a shaft of the refrigerating compressor 42, in particular in a rotationally fixed manner. Thus, by driving the belt 30, the compressor pulley 44 and thus the refrigerating compressor 42 are driven. As shown in Fig. 3, the refrigerating compressor 42 is mounted on the mounting bracket 26. Since the alternator 34, the hydraulic steering pump 38 and the refrigerating compressor 42 are auxiliary components which are also referred to as accessory drive components, the mounting bracket 26 is also referred to as an accessory drive mount.

The secondary refrigerating compressor 42 may be configured as an optional component which may be omitted, as depicted in Figs. 1 and 2. In particular, the refrigerating compressor 42 may be a secondary A/C compressor which may be provided in addition to the refrigerating compressor 46, which may be a primary A/C compressor. In an embodiment, both refrigerating compressors 42 and 46 may be omitted as components of the internal combustion engine 10, as depicted in Fig. 1.

In order to arrange said auxiliary components and thus the internal combustion engine 10 in a particularly space-saving way, in particular in a small installation space of the vehicle, the alternator 34, the hydraulic steering pump 38 and the refrigerating compressor 42 are arranged on a left-hand side L of the plane 18 with respect to the installation position of the internal combustion engine 10 and the forward driving direction of the vehicle. As shown in Fig. 1, the primary refrigerating compressor 46 is arranged on a right-hand side R of the plane 18 with respect to the installation position of the internal combustion engine 10 and a forward driving direction of the vehicle, the right-hand side R being opposite of the left-hand side L in a transverse direction of the vehicle. Said transverse direction of the vehicle is illustrated by a double arrow 48, when the transverse direction of the vehicle extends perpendicularly to both, the longitudinal direction of the vehicle (double arrow 22) and the vertical direction of the vehicle (double arrow 20). Moreover, for example, the belt drive 28 is configured as a front engine accessory drive (FEAD) system configured to drive said auxiliary components. Moreover, preferably, the belt 30 is arranged on a front side of the internal combustion engine 10, in particular the cylinder block 12, wherein the front side faces in the forward travel direction (i.e. in the longitudinal direction of the vehicle towards a front of the vehicle) in a particularly easy way.

Preferably, the alternator 34 is a pad mounted alternator such that, for example, the alternator 34 is mounted on the mounting bracket 26 via a mounting pad. Alternatively or additionally, the secondary refrigerating compressor 42 may be a pad mounted compressor which may be mounted on the mounting bracket 26 via a mounting pad.

The belt drive 28 and thus the internal combustion engine 10 comprise a plurality of idler pulleys 50a-c. The respective idler pulley 50a-c is rotatable about a respective pulley rotation axis in relation to the cylinder block 12. The pulley rotation axes extend parallel to each other and are spaced away from each other. Moreover, the respective pulley rotation axis extends parallel to the crankshaft rotation axis 16 and is spaced away from the crankshaft rotation axis 16. For example, the idler pulley 50a or the idler pulley 50b is rotatably mounted on the mounting bracket 26 about the respective pulley rotation axis. For example, the internal combustion engine 10 comprises a second mounting bracket 52 shown in Fig. 6. The mounting bracket 52 is separately manufactured from both, the cylinder block 12 and the mounting bracket 26. Preferably, the mounting bracket 52 is formed in one piece. This means that, preferably, the mounting bracket 52 is an integral part (i.e. an integrally formed part). Moreover, for example, the idler pulley 50c is rotatably mounted on the second mounting bracket 52 about the pulley rotation axis of the idler pulley 50c. Thus, the idler pulleys 50a-c may be mounted in particularly advantageous way. Since, the refrigerating compressor 42 may be provided as optional component in a need-based manner, the internal combustion engine 10 may be equipped with both refrigerating compressors 42 and 46, for example, for applications that require added A/C capacity, with only the primary refrigerating compressor 46.

### Reference Signs

- 10: internal combustion engine
- 12: cylinder block
- 14: crankshaft
- 16: crankshaft rotation axis
- 18: plane
- 20: double arrow
- 22: double arrow
- 24: arrow
- 26: first mounting bracket
- 28: belt drive
- 30: belt
- 32: crankshaft pulley
- 34: alternator
- 36: alternator pulley
- 38: hydraulic steering pump
- 40: pump pulley
- 42: secondary refrigerating compressor
- 44: compressor pulley
- 46: primary refrigerating compressor
- 48: double arrow
- 50a-c: idler pulley
- 52: second mounting bracket
- 54: belt
- 56: compressor pulley
- L: left-hand side
- R: right-hand side

## Claims

1. An internal combustion engine (10) for a vehicle, comprising:
a cylinder block (12) comprising a plurality of cylinders;
a crankshaft (14) rotatably mounted on the cylinder block (12) about a crankshaft rotation axis (16) extending in a plane (18) which, with respect to an installation position of the internal combustion engine (10), extends in a vertical direction (20);
a mounting bracket (26) separately manufactured from the cylinder block (12), the mounting bracket (26) being attached to the cylinder block (12);
at least one belt (30) configured to be driven by the crankshaft (14);
at least an alternator (34) configured to be driven by the belt (30), the alternator (34) being mounted on the mounting bracket (26);
at least a hydraulic steering pump (38) configured to be driven by the belt (30), the hydraulic steering pump (38) being mounted on the mounting bracket (26); and
a primary refrigerating compressor (46) which is mounted on the cylinder block (12);
wherein the alternator (34) and the hydraulic steering pump (38) are arranged on a first side of the plane (18), and wherein the primary refrigerating compressor (46) is arranged on an opposite side of the plane (18) which is opposite the first side.

2. The internal combustion engine (10) according to claim 1,
wherein the internal combustion engine (10) comprises a secondary refrigerating compressor (42) being mounted to the mounting bracket (26) configured to be driven by the belt (30), wherein the refrigerating compressor (42) is arranged on the one hand side of the plane (18).

3. The internal combustion engine (10) according to claim 1 or 2,
wherein the internal combustion engine (10) comprises at least one idler pulley (50a-c) for guiding the belt (30).

4. The internal combustion engine (10) according to claim 3,
wherein the idler pulley (50a-c) is rotatably mounted on the mounting bracket (26) about a pulley rotation axis extending parallel to the crankshaft rotation axis (16).

5. The internal combustion engine (10) according to claim 3,
wherein the internal combustion engine (10) comprises a second mounting bracket (52) separately manufactured from both the cylinder block (12) and the first mounting bracket (26), wherein the idler pulley (50a-c) is rotatably mounted on the second mounting bracket (52) about a pulley rotation axis extending parallel to the crankshaft rotation axis (16).

6. The internal combustion engine (10) according to any one of the preceding claims, wherein the mounting bracket (26) is an integrally formed part.

7. A vehicle comprising:
an internal combustion engine (10) according to any one of the preceding claims, wherein the plane (18) extends in a vertical direction (20) of the vehicle with respect to an installation position of the internal combustion engine (10),
wherein the wherein the alternator (34) and the hydraulic steering pump (38) are arranged on a left-hand side (L) of the plane (18); and
wherein the primary refrigerating compressor (46) is arranged on a right-hand side (R) of the plane (18).

## Patentansprüche

1. Verbrennungsmotor (10) für ein Fahrzeug, umfassend:
einen Zylinderblock (12) mit einer Vielzahl von Zylindern;
eine Kurbelwelle (14), die drehbar an dem Zylinderblock (12) um eine Kurbelwellen-Drehachse (16) angebracht ist, die sich in einer Ebene (18) erstreckt, die sich in Bezug auf eine Einbaulage des Verbrennungsmotors (10) in einer vertikalen Richtung (20) erstreckt;
eine separat vom Zylinderblock (12) hergestellte Halterung (26), wobei die Halterung (26) am Zylinderblock (12) befestigt ist;
mindestens einen Riemen (30), der so konfiguriert ist, dass er von der Kurbelwelle (14) angetrieben wird;
mindestens einen Generator (34), der so konfiguriert ist, dass er durch den Riemen (30) angetrieben wird, wobei der Generator (34) an der Halterung (26) angebracht ist;
mindestens eine hydraulische Lenkpumpe (38), die so konfiguriert ist, dass sie von dem Riemen (30) angetrieben wird, wobei die hydraulische Lenkpumpe (38) an der Halterung (26) angebracht ist; und
einen primären Kühlkompressor (46), der an dem Zylinderblock (12) angebracht ist;
wobei der Generator (34) und die hydraulische Lenkpumpe (38) auf einer ersten Seite der Ebene (18) angeordnet sind und wobei der primäre Kühlkompressor (46) auf einer gegenüberliegenden Seite der Ebene (18) angeordnet ist, die der ersten Seite gegenüberliegt.

2. Verbrennungsmotor (10) nach Anspruch 1,
wobei der Verbrennungsmotor (10) einen sekundären Kühlkompressor (42) umfasst, der an der Halterung (26) angebracht ist, der so konfiguriert ist, dass er durch den Riemen (30) angetrieben wird, wobei der Kühlkompressor (42) auf der ersten Seite der Ebene (18) angeordnet ist.

3. Verbrennungsmotor (10) nach Anspruch 1 oder 2,
wobei der Verbrennungsmotor (10) mindestens eine Riemenscheibe (50a-c) zum Führen des Riemens (30) umfasst.

4. Verbrennungsmotor (10) nach Anspruch 3,
wobei die Riemenscheibe (50a-c) drehbar an der Halterung (26) um eine parallel zur Kurbelwellen-Drehachse (16) verlaufende Scheibendrehachse gelagert ist.

5. Verbrennungsmotor (10) gemäß Anspruch 3,
wobei der Verbrennungsmotor (10) eine zweite Halterung (52) umfasst, die separat vom Zylinderblock (12) und der ersten Halterung (26) hergestellt ist, wobei die Riemenscheibe (50a-c) drehbar an der zweiten Halterung (52) um eine Scheibendrehachse angebracht ist, die sich parallel zur Kurbelwellen-Drehachse (16) erstreckt.

6. Verbrennungsmotor (10) nach einem der vorstehenden Ansprüche, wobei die Halterung (26) ein einstückig geformtes Teil ist.

7. Fahrzeug, umfassend:
einen Verbrennungsmotor (10) gemäß einem der vorstehenden Ansprüche, wobei sich die Ebene (18) in einer vertikalen Richtung (20) des Fahrzeugs in Bezug auf eine Einbaulage des Verbrennungsmotors (10) erstreckt,
wobei der Generator (34) und die hydraulische Lenkpumpe (38) auf der linken Seite (L) der Ebene (18) angeordnet sind; und
wobei der primäre Kühlkompressor (46) auf der rechten Seite (R) der Ebene (18) angeordnet ist.

## Revendications

1. Moteur à combustion interne (10) pour un véhicule, comprenant :
un bloc-cylindres (12) comprenant une pluralité de cylindres ;
un vilebrequin (14) monté de manière rotative sur le bloc-cylindres (12) autour d'un axe de rotation du vilebrequin (16) s'étendant dans un plan (18) qui, par rapport à une position d'installation du moteur à combustion interne (10), s'étend dans une direction verticale (20) ;
un support de montage (26) fabriqué séparément du bloc-cylindres (12), le support de montage (26) étant fixé au bloc-cylindres (12) ;
au moins une courroie (30) configurée pour être entraînée par le vilebrequin (14) ;
au moins un alternateur (34) configuré pour être entraîné par la courroie (30), l'alternateur (34) étant monté sur le support de montage (26) ;
au moins une pompe de direction hydraulique (38) configurée pour être entraînée par la courroie (30), la pompe de direction hydraulique (38) étant montée sur le support de montage (26) ; et
un compresseur de réfrigération primaire (46) qui est monté sur le bloc-cylindres (12) ;
dans lequel l'alternateur (34) et la pompe de direction hydraulique (38) sont disposés sur un premier côté du plan (18), et dans lequel le compresseur frigorifique primaire (46) est disposé sur un côté opposé du plan (18) qui est opposé au premier côté.

2. Moteur à combustion interne (10) selon la revendication 1,
dans lequel le moteur à combustion interne (10) comprend un compresseur frigorifique secondaire (42) monté sur le support de montage (26) configuré pour être entraîné par la courroie (30), dans lequel le compresseur frigorifique (42) est disposé d'un côté du plan (18).

3. Moteur à combustion interne (10) selon la revendication 1 ou 2,
dans lequel le moteur à combustion interne (10) comprend au moins une poulie de renvoi (50a-c) pour guider la courroie (30).

4. Moteur à combustion interne (10) selon la revendication 3,
dans lequel la poulie de renvoi (50a-c) est montée de manière rotative sur le support de montage (26) autour d'un axe de rotation de poulie s'étendant parallèlement à l'axe de rotation du vilebrequin (16).

5. Moteur à combustion interne (10) selon la revendication 3,
dans lequel le moteur à combustion interne (10) comprend un deuxième support de montage (52) fabriqué séparément du bloc-cylindres (12) et du premier support de montage (26), dans lequel la poulie de renvoi (50a-c) est montée de manière rotative sur le deuxième support de montage (52) autour d'un axe de rotation de poulie s'étendant parallèlement à l'axe de rotation du vilebrequin (16).

6. Moteur à combustion interne (10) selon l'une quelconque des revendications précédentes, dans lequel le support de montage (26) est une pièce moulée d'un seul tenant.

7. Véhicule comprenant :
un moteur à combustion interne (10) selon l'une quelconque des revendications précédentes, dans lequel le plan (18) s'étend dans une direction verticale (20) du véhicule par rapport à une position d'installation du moteur à combustion interne (10),
dans lequel l'alternateur (34) et la pompe de direction hydraulique (38) sont disposés sur le côté gauche (L) du plan (18) ; et
dans lequel le compresseur de réfrigération primaire (46) est disposé sur le côté droit (R) du plan (18).
